# EUROPÄISCHE PATENTANMELDUNG

(11) **EP 3 925 764 A1**
(43) Veröffentlichungstag der Anmeldung: **22.12.2021**
(21) Anmeldenummer: 21178431.9
(22) Anmeldetag: 09.06.2021
(51) Int. Cl.: B29C 65/18, B29C 65/10, B29C 65/30, B29C 65/78, B65B 7/16, B65B 51/14

(54) **SIEGELN MIT DRUCKLUFTUNTERSTÜTZUNG**

(30) Priorität: 18.06.2020 DE 102020207551
(71) Anmelder: MULTIVAC Sepp Haggenmüller SE & Co. KG, 87787 Wolfertschwenden (DE)
(72) Erfinder: ICKERT, Lars, 87437 Kempten (DE)
(74) Vertreter: Grünecker Patent- und Rechtsanwälte PartG mbB

(57) **Zusammenfassung**

Ein Verfahren zum Verschließen einer Verpackungsschale (4) umfasst das Anordnen einer mit einem zu verpackenden Produkt befüllten Verpackungsschale (4) zwischen einem Unterwerkzeug (9) und einem Oberwerkzeug (11) einer Siegelstation (5), das Positionieren einer Deckelfolie (7) über der Verpackungsschale (4) zwischen dem Unterwerkzeug (9) und dem Oberwerkzeug (11) der Siegelstation (5), und das Zusammenpressen der Deckelfolie (7) und der Verpackungsschale (4) durch eine untere Siegelfläche (29) des Unterwerkzeugs (9) und eine mit der unteren Siegelfläche (29) zusammenwirkende obere Siegelfläche (31) des Oberwerkzeugs (11). Bei dem Zusammenpressen werden die Deckelfolie (7) und die Verpackungsschale (4) entlang einer Siegelnaht (19) miteinander verbunden. Während des Zusammenpressens der Deckelfolie (7) und der Verpackungsschale (4) wird durch Zuführen von Druckgas aus einer Druckgasquelle (37) lokal ein Überdruck erzeugt, welcher als Gegendruck mit der unteren Siegelfläche (29) oder mit der oberen Siegelfläche (31) zusammenwirkt, um die Deckelfolie (7) und die Verpackungsschale (4) zusam menzupressen.

## Beschreibung

Die Erfindung betrifft das Ansiegeln einer Deckelfolie an eine Verpackungsschale zum Verschließen der Verpackungsschale.

Aus der Praxis sind Verpackungsmaschinen mit einer Siegelstation zum Verschließen von mit einem zu verpackenden Produkt befüllten Verpackungsschalen durch Ansiegeln einer Deckelfolie bekannt. Die Siegelstation umfasst für gewöhnlich ein Unterwerkzeug und ein Oberwerkzeug, die zum Verbinden der Verpackungsschale und der Deckelfolie entlang eines Flanschbereichs der Verpackungsschale mittels Wärme und Druckeinwirkung zusammenwirken. Beim Siegelvorgang werden die Verpackungsschale und die Deckelfolie zwischen einer Siegelfläche des Unterwerkzeugs und einer Siegelfläche des Oberwerkzeugs entlang einer umlaufenden Siegelnaht zusammengepresst. Insbesondere beim Verpacken von Lebensmitteln ist darauf zu achten, dass die Siegelnaht tatsächlich dicht ist, um eine entsprechende Haltbarkeit der Produkte gewährleisten zu können.

Das zuverlässige Erreichen einer dichten Siegelnaht stellt eine besondere Herausforderung dar, wenn die Verpackungsschale in dem für die Siegelnaht vorgesehenen Bereich lokal eine oder mehrere Unregelmäßigkeiten aufweist, wie zum Beispiel eine Erhebung, eine Vertiefung, eine Ausnehmung, einen Schlitz, eine abweichende Materialstärke, oder eine abweichende Materialart. In diesem Fall kann es schwierig sein, beim Siegeln entlang der gesamten Erstreckung der Siegelnaht die Verpackungsschale und die Deckelfolie mit einem ausreichenden Druck aneinander zu pressen.

Es ist Aufgabe der Erfindung, einen Weg bereitzustellen, wie auch Verpackungsschalen mit einem Siegelbereich, welcher lokal eine oder mehrere Unregelmäßigkeiten aufweist, zuverlässig entlang einer dichten Siegelnaht mit einer Deckelfolie verschlossen werden können.

Diese Aufgabe wird jeweils gelöst durch ein Verfahren gemäß Anspruch 1, durch eine Siegelstation gemäß Anspruch 10 und durch eine Verwendung gemäß Anspruch 14. Die abhängigen Ansprüche geben vorteilhafte Ausführungsformen der Erfindung an.

Gemäß einem Aspekt der Erfindung wird ein Verfahren zum Verschließen einer Verpackungsschale bereitgestellt. Das Verfahren umfasst das Anordnen einer mit einem zu verpackenden Produkt befüllten Verpackungsschale zwischen einem Unterwerkzeug und einem Oberwerkzeug einer Siegelstation. Es wird eine Deckelfolie über der Verpackungsschale zwischen dem Unterwerkzeug und dem Oberwerkzeug der Siegelstation positioniert. Durch eine untere Siegelfläche des Unterwerkzeugs und eine mit der unteren Siegelfläche zusammenwirkende obere Siegelfläche des Oberwerkzeugs werden die Deckelfolie und die Verpackungsschale zusammengepresst. Bei dem Zusammenpressen werden die Deckelfolie und die Verpackungsschale entlang einer Siegelnaht miteinander verbunden. Durch Zuführen von Druckgas aus einer Druckgasquelle wird während des Zusammenpressens der Deckelfolie und der Verpackungsschale lokal ein Überdruck erzeugt. Der Überdruck wirkt als Gegendruck mit der unteren Siegelfläche oder mit der oberen Siegelfläche zusammen, um die Deckelfolie und die Verpackungsschale zusammenzupressen.

Der durch das Zuführen des Druckgases erzeugte Überdruck kann den Siegelvorgang lokal unterstützen. Durch das Erzeugen des lokalen Überdrucks als Gegendruck für die untere Siegelfläche oder die obere Siegelfläche kann die Qualität oder Stärke der Siegelung lokal in einem oder mehreren Bereichen verbessert werden. Insbesondere kann der lokale Überdruck den Siegelvorgang an einer oder mehreren Stellen unterstützen, an denen der durch das Zusammenpressen der Deckelfolie und der Verpackungsschale durch die untere Siegelfläche und die obere Siegelfläche erreichte Siegeldruck alleine nicht ausreicht. Der durch das Zuführen von Druckgas erzeugte Überdruck kann als nicht formgebundenes Gegendruckelement wirken. Das durch den Überdruck bereitgestellte, nicht formgebundene Gegendruckelement kann sich perfekt an die lokale Formgebung der Verpackungsschale anpassen und somit unabhängig von der lokalen Formgebung der Verpackungsschale einen gleichmäßigen Gegendruck für das Siegeln bereitstellen.

Der Überdruck kann in einem Bereich erzeugt werden, in dem die Verpackungsschale bezüglich ihrer Form oder ihres Materials eine lokale Unregelmäßigkeit aufweist. Zum Beispiel kann der Überdruck in einem Bereich erzeugt werden, in dem die Verpackungsschale eine Erhebung, eine Vertiefung, eine Ausnehmung, einen Schlitz, eine abweichende Materialstärke, oder eine abweichende Materialart aufweist. Der Überdruck kann in einem Bereich erzeugt werden, in dem die Verpackungsschale eine reduzierte Steifigkeit aufweist. Der Überdruck kann in einem Bereich erzeugt werden, in dem erschwerte Bedingungen für das Aufbringen eines ausreichenden Pressdrucks zum Zusammenpressen der Verpackungsschale und der Deckelfolie mittels der unteren Siegelfläche und der oberen Siegelfläche vorliegen.

Vorzugsweise wird der Überdruck in einem Bereich erzeugt, in dem die Verpackungsschale lokal eine reduzierte Dichte aufweist. Der Überdruck kann dafür sorgen, dass einem durch die untere Siegelfläche oder durch die obere Siegelfläche aufgebrachten Pressdruck ein geeigneter Gegendruck entgegenwirkt, auch wenn dieser aufgrund der lokal reduzierten Dichte der Verpackungsschale in dem betreffenden Bereich nicht, oder nicht vollständig, von der gegenüberliegenden Siegelfläche aufgebracht werden kann. Der Überdruck kann dafür sorgen, dass auch in einem Bereich, in dem die Verpackungsschale eine reduzierte Dicke aufweist, eine ausreichend starke Verbindung zwischen der Verpackungsschale und der Deckelfolie erzeugt wird.

Wenn die Verpackungsschale zumindest zwei übereinander angeordnete Materiallagen umfasst, wird der Überdruck vorzugsweise in einem Bereich erzeugt, in dem zumindest eine Materiallage der Verpackungsschale ausgespart ist. Im Bereich der ausgesparten Materiallage kann die Verpackungsschale eine lokal reduzierte Dicke und/oder eine reduzierte Steifigkeit aufweisen.

Zum Beispiel kann die Verpackungsschale eine erste Materiallage und eine zweite Materiallage aufweisen. Die erste Materiallage kann eine höhere Steifigkeit aufweisen als die zweite Materiallage. Die erste Materiallage kann eine Karton- oder Papierlage sein. Die zweite Materiallage kann eine Folienlage sein. Die erste Materiallage und die zweite Materiallage können übereinanderliegend miteinander verbunden sein. Zum Beispiel könnte die erste Materiallage die Form der Verpackungsschale definieren. Die zweite Materiallage könnte im Inneren der Schale auf der ersten Materiallage angebracht sein, um ein zu verpackendes Produkt von der ersten Materiallage zu trennen und/oder um die Verpackungsschale abzudichten. Die zweite Materiallage ist auf der ersten Materiallage vorzugsweise als Sauerstoffbarriereschicht zwischen dem Produkt und der ersten Materiallage ausgebildet.

Im Fall einer rechteckigen oder polygonalen Verpackungsschale könnte die erste Materiallage, beispielsweise im Bereich der Ecken der Verpackungsschale, schlitzförmige Ausnehmungen umfassen, um ein Falten der Verpackungsschale zu erleichtern. Die zweite Materiallage könnte im Inneren der Verpackungsschale auf der ersten Materiallage angebracht sein und die schlitzförmigen Ausnehmungen überspannen. Beim Ansiegeln der Deckelfolie an die Verpackungsschale könnte in einem oder mehreren Bereichen, in denen die schlitzförmigen Ausnehmungen die Siegelnaht kreuzen, ein Unterdruck erzeugt werden, welcher als Gegendruck mit der unteren Siegelfläche oder mit der oberen Siegelfläche zusammenwirkt um die Deckelfolie und die Verpackungsschale zusammenzupressen. Der Überdruck kann das Auftreten von Undichtigkeiten aufgrund einer mangelhaften Pressdruckübertragung im Bereich der schlitzförmigen Ausnehmungen beim Siegeln verringern.

Der Überdruck kann an zumindest einer Ecke der Verpackungsschale erzeugt werden. Gemäß einer Ausführungsform wird der Überdruck ausschließlich an einer oder mehreren Ecken der Verpackungsschale erzeugt.

Der lokale Überdruck kann an einer Stelle erzeugt werden, welche im Verlauf der zu erzeugenden Siegelnaht liegt oder die zu erzeugende Siegelnaht kreuzt.

In der unteren Siegelfläche oder in der oberen Siegelfläche kann eine Druckgasöffnung vorgesehen sein. Der Überdruck kann durch die Druckgasöffnung bereitgestellt werden. Ein Vorsehen der Druckgasöffnung in der unteren Siegelfläche oder in der oberen Siegelfläche erleichtert einen Druckaufbau während des Siegelns direkt im Bereich der zu erzeugenden Siegelnaht. Wenn die Druckgasöffnung in der unteren Siegelfläche vorgesehen ist, kann der Überdruck als Gegendruck mit der oberen Siegelfläche zusammenwirken. Wenn die Druckgasöffnung in der oberen Siegelfläche vorgesehen ist, kann der Überdruck als Gegendruck mit der unteren Siegelfläche zusammenwirken.

Vorzugsweise erfolgt das Erzeugen des Überdrucks durch Zuführen des Druckgases erst, nachdem die Deckelfolie und die Verpackungsschale durch die untere Siegelfläche und die obere Siegelfläche zumindest über einen ersten Zeitraum hinweg zusammengepresst wurden. Insbesondere können die Deckelfolie und die Verpackungsschale vor dem Erzeugen des Überdrucks bereits unter Wärmeeinwirkung zusammengepresst worden sein. Wenn bereits vor dem Erzeugen des Überdrucks mit der Siegelung begonnen wurde, kann der Verlauf der Siegelnaht auf der Verpackungsschale und auf der Deckelfolie bereits vor dem Erzeugen des Überdrucks definiert worden sein. Wenn vor dem Erzeugen des Überdrucks bereits zumindest bereichsweise eine Verbindung zwischen der Verpackungsschale und der Deckelfolie besteht, vereinfacht sich das positionsgenaue Erzeugen des Überdrucks. Wenn der lokale Überdruck erst erzeugt wird, wenn mit der Siegelung bereits begonnen wurde, vereinfacht sich das Erzeugen des lokalen Überdrucks, da das Druckgas durch die begonnene Siegelung zumindest teilweise am Entweichen gehindert wird.

Vorzugsweise wird der Überdruck vor einem Beenden des Zusammenpressens der Deckelfolie und der Verpackungsschale durch die untere Siegelfläche und die obere Siegelfläche zumindest teilweise wieder abgebaut. Hierdurch kann ein Druckverlust beim Öffnen der Siegelstation verringert werden. Außerdem kann verhindert werden, dass die Verpackungsschale bei oder nach dem Öffnen der Siegelstation durch den Überdruck ungewollt bewegt oder verschoben wird.

Der Überdruck kann ein Druck von zumindest 4 bar, oder zumindest 5 bar, oder zumindest 6 bar sein.

Vorzugsweise wird das Druckgas vor dem Zuführen aktiv erwärmt. Durch Erwärmen des Druckgases kann vermieden werden, dass die Siegelnaht während des Siegelprozesses durch das Druckgas abgekühlt wird, was die Qualität der Siegelnaht verringern könnte. Das Druckgas kann mittels einer Heizeinrichtung erwärmt werden. Zum Erwärmen des Druckgases kann dieses vor Erreichen der Stelle, an der der Überdruck erzeugt werden soll, durch beheizte Bereiche des Unterwerkzeugs oder des Oberwerkzeugs geleitet werden. Es wäre aber auch denkbar, das Druckgas außerhalb des Oberwerkzeugs und des Unterwerkzeugs oder außerhalb der Siegelstation zu beheizen. Das Druckgas kann durch eine Heizeinrichtung zum Beheizen des Unterwerkzeugs oder durch eine Heizeinrichtung zum Beheizen des Oberwerkzeugs mitbeheizt werden. Es könnte aber auch eine Heizeinrichtung zum Beheizen des Druckgases vorgesehen sein, die unabhängig von einem Beheizen des Unterwerkzeugs und einem Beheizen des Oberwerkzeugs ist. Die Heizeinrichtung könnte beispielsweise eine elektrische Heizeinrichtung sein.

Gemäß einem weiteren Aspekt betrifft die Erfindung eine Siegelstation. Die Siegelstation umfasst ein Unterwerkzeug mit einer unteren Siegelfläche und ein Oberwerkzeug mit einer oberen Siegelfläche. Das Oberwerkzeug ist oberhalb des Unterwerkzeugs angeordnet. Die Siegelstation umfasst zudem eine Antriebseinrichtung. Die Antriebseinrichtung ist dazu konfiguriert, das Unterwerkzeug und das Oberwerkzeug aufeinander zu zubewegen, sodass eine Verpackungsschale und eine Deckelfolie zum Verschließen der Verpackungsschale zwischen der unteren Siegelfläche und der oberen Siegelfläche aneinandergepresst werden. Zudem umfasst die Siegelstation eine Druckgasquelle. In der unteren Siegelfläche oder in der oberen Siegelfläche ist eine Druckgasöffnung vorgesehen. Die Druckgasöffnung ist dazu konfiguriert, ein von der Druckgasquelle bereitgestelltes Druckgas entweichen zu lassen.

Durch das Vorsehen der Druckgasöffnung kann im Bereich der Siegelnaht durch Zuführen von Druckgas während des Zusammenpressens der Deckelfolie und der Verpackungsschale lokal ein Überdruck erzeugt werden, welcher als Gegendruck mit der unteren Siegelfläche oder mit der oberen Siegelfläche zusammenwirkt, um die Deckelfolie und die Verpackungsschale zusammenzupressen.

Vorzugsweise weist die untere Siegelfläche oder die obere Siegelfläche eine Vertiefung auf, in der die Druckgasöffnung angeordnet ist. Durch Vorsehen der Vertiefung kann ein Entweichen des Druckgases erleichtert werden.

Die Siegelstation kann zudem ein Ventil umfassen, welches dazu konfiguriert ist, einen Fluss des Druckgases von der Druckgasquelle zu der Druckgasöffnung wahlweise zu verhindern oder freizugeben. Die Siegelstation kann zudem eine Steuereinheit umfassen. Die Steuereinheit kann dazu konfiguriert sein, die Antriebseinrichtung zum Aneinanderpressen der Verpackungsschale und der Deckelfolie durch die untere Siegelfläche und die obere Siegelfläche anzusteuern. Die Steuereinheit kann dazu konfiguriert sein, das Ventil zum Freigeben des Flusses des Druckgases zu der Druckgasöffnung anzusteuern, nachdem die Deckelfolie und die Verpackungsschale zumindest für einen vorbestimmten ersten Zeitraum zusammengepresst wurden.

Die Steuereinheit kann das Ventil zum Verhindern des Flusses des Druckgases von der Druckgasquelle zu der Druckgasöffnung ansteuern, wenn ein auf den ersten Zeitraum folgender, vorbestimmter zweiter Zeitraum abgelaufen ist. Vorzugsweise steuert die Steuereinheit die Antriebseinrichtung erst nach Ablauf des zweiten Zeitraums zum Öffnen der Siegelstation an, wobei beim Öffnen der Siegelstation das Oberwerkzeug und das Unterwerkzeug voneinander entfernt werden.

Das untere Siegelwerkzeug kann als Schalenaufnahme zur Aufnahme der Verpackungsschale ausgebildet sein. Die untere Siegelfläche kann eine Auflagefläche für einen Flansch der Verpackungsschale bereitstellen.

Gemäß einem weiteren Aspekt betrifft die Erfindung eine Verwendung von Druckgas zum Bereitstellen von Gegendruck beim Verbinden einer Verpackungsschale mit einer Deckelfolie entlang einer Siegelnaht durch Zusammenpressen der Verpackungsschale und der Deckelfolie durch eine untere Siegelfläche und eine obere Siegelfläche.

Vorzugsweise wird das Druckgas bezüglich einer Erstreckung der Siegelnaht nur lokal zugeführt, um während des Verbindens der Verpackungsschale und der Deckelfolie eine lokale Irregularität in der Verpackungsschale auszugleichen. Dies ist in dem Sinne zu verstehen, dass der Einfluss der lokalen Irregularität auf den Siegelvorgang ausgeglichen werden soll. Es ist nicht erforderlich, dass die lokale Irregularität selbst durch das Druckgas beseitigt wird.

Die Erfindung betrifft ein Verfahren zum Verschließen einer Verpackungsschale, eine Siegelstation und eine Verwendung von Druckgas. Merkmale, Eigenschaften und Erläuterungen die in Bezug auf einen dieser Aspekte beschrieben werden, lassen sich jeweils auf die anderen Aspekte übertragen. Insbesondere kann die Siegelstation dazu geeignet, ausgelegt und/oder konfiguriert sein, das Verfahren oder die Verwendung durchzuführen.

Im Folgenden soll die Erfindung anhand einer Ausführungsform unter Bezugnahme auf die Figuren weiter erläutert werden. Dabei zeigt
- Figur 1: eine schematische Perspektivansicht einer Verpackungsmaschine mit einer Siegelstation gemäß einer Ausführungsform;
- Figur 2: eine schematische Draufsicht auf eine mit der Siegelstation verschlossene Verpackung gemäß der Ausführungsform;
- Figur 3: eine ausschnittsweise schematische Schnittdarstellung der Verpackung, wobei die Schnittlinie in Figur 2 als I-I eingezeichnet ist;
- Figur 4: die Verpackung aus Figur 2 in schematischer Perspektivansicht von unten;
- Figur 5: eine Detailansicht von Bereich F aus Figur 4;
- Figur 6: eine schematische Draufsicht auf das Unterwerkzeug der Siegelstation gemäß der Ausführungsform; und
- Figur 7: eine schematische Schnittdarstellung während des Siegelvorgangs, wobei die Lage des Schnitts in Figur 6 mit II-II gekennzeichnet ist.

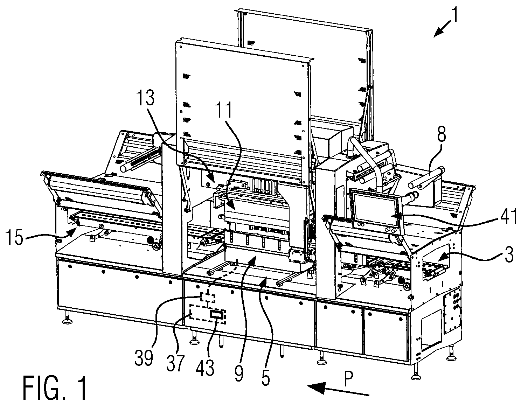

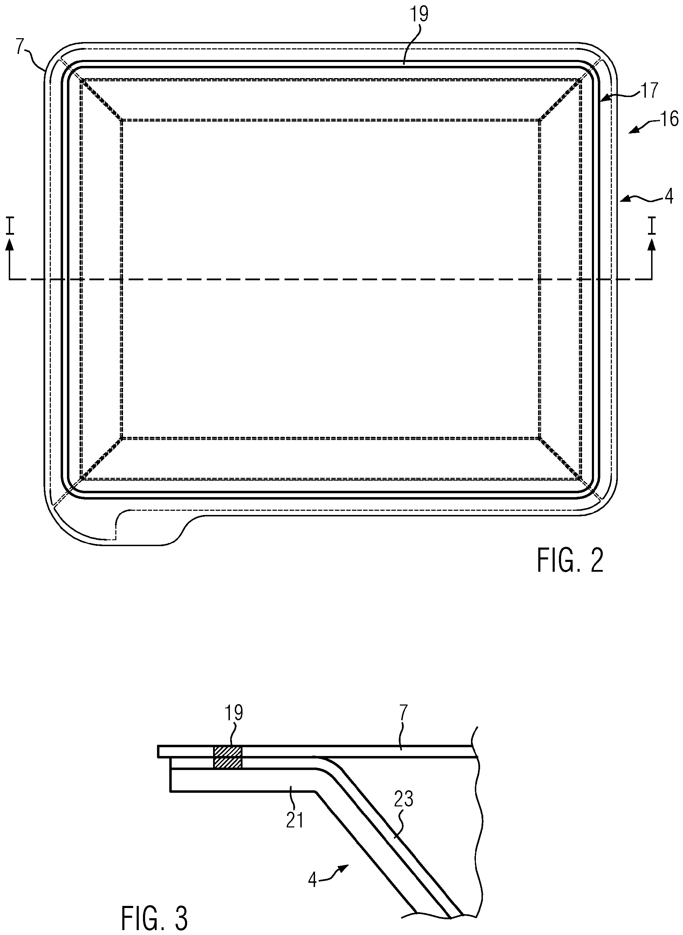

Figur 1 zeigt eine Verpackungsmaschine 1 gemäß einer Ausführungsform. Die Verpackungsmaschine 1 umfasst eine Zuführvorrichtung 3 für mit Produkt befüllte, zu verschließende Verpackungsschalen 4 (siehe Figur 2). Die Verpackungsschalen 4 werden von der Zuführvorrichtung 3 entlang einer Produktionsrichtung P mittels eines Greifersystems in eine Siegelstation 5 umgesetzt. In der Siegelstation 5 werden die Verpackungsschalen 4 mit einer Deckelfolie 7 verschlossen. Die Deckelfolie 7 wird der Siegelstation 5 von einer Vorratsrolle (nicht dargestellt) zugeführt, welche an einer Folienaufnahme 8 der Verpackungsmaschine 1 anbringbar ist. Die Siegelstation 5 umfasst ein Unterwerkzeug 9 und ein Oberwerkzeug 11. Das Unterwerkzeug 9 und das Oberwerkzeug 11 sind übereinander angeordnet. Mittels einer Antriebseinrichtung 13 kann die Siegelstation 5 zwischen einer geöffneten Stellung und einer geschlossenen Stellung verfahren werden. In der geöffneten Stellung sind das Unterwerkzeug 9 und das Oberwerkzeug 11 entlang einer vertikalen Richtung voneinander beabstandet, sodass zu verschließende Verpackungsschalen 4 auf das Unterwerkzeug 9 umgesetzt werden können und ein entsprechender Abschnitt der Deckelfolie 7 zum Verschließen der Verpackungsschalen 4 in einen Bereich zwischen dem Unterwerkzeug 9 und dem Oberwerkzeug 11 verbracht werden kann, um über der Verpackungsschalen 4 zu liegen. Aus der geöffneten Stellung heraus wird die Siegelstation 5 in eine geschlossene Stellung oder Siegelstellung verbracht, indem die Antriebseinrichtung 13 das Unterwerkzeug 9 und das Oberwerkzeug 11 entlang der vertikalen Richtung aufeinander zu bewegt. Hierbei ist es denkbar, dass sowohl das Unterwerkzeug 9 als auch das Oberwerkzeug 11 bewegt werden, oder dass nur entweder das Unterwerkzeug 9 oder das Oberwerkzeug 11 bewegt wird.

Bei einem Siegelvorgang werden eine Verpackungsschale 4 und die Deckelfolie 7 durch das Unterwerkzeug 9 und das Oberwerkzeug 11 aneinandergepresst und miteinander verbunden. Dies geschieht vorzugsweise unter Wärmeeinwirkung. Zum Beispiel kann das Unterwerkzeug 9 und/oder das Oberwerkzeug 11 beheizt werden, um den Siegelvorgang zu unterstützen.

Nach erfolgtem Siegeln wird die Siegelstation 5 wieder geöffnet und die verschlossenen Verpackungsschalen 4 werden an eine Abführvorrichtung 15 übergeben.

Figur 2 zeigt eine schematische Draufsicht auf eine fertiggestellte Verpackung 16, welche in der Siegelstation 5 verschlossen wurde. Die Verpackung 16 weist die Verpackungsschale 4 sowie die die Verpackungsschale 4 verschließende Deckelfolie 7 auf. Die Verpackungsschale 4 ist als rechteckige Verpackungsschale gezeigt. Es versteht sich, dass auch beliebige andere Formen von Verpackungsschalen 4 denkbar sind. Die Verpackungsschale 4 umfasst einen Flansch 17, welcher die Verpackungsschale 4 umläuft. Der Flansch 17 stellt eine Verbindungsfläche für die Verbindung mit der Deckelfolie 7 bereit. Wie in Figur 2 dargestellt, wurden die Verpackungsschale 4 und die Deckelfolie 7 während des Siegelprozesses entlang einer umlaufenden Siegelnaht 19 miteinander verbunden. Die Siegelnaht 19 verläuft entlang des Flansches 17 vollständig um die Verpackungsschale 16 herum.

Figur 3 zeigt eine ausschnittsweise Schnittansicht durch die in Figur 2 dargestellte Verpackung 16 bezüglich der Schnittlinie I-I. Aus Figur 3 ist ersichtlich, dass die Verpackungsschale 4 aus zwei übereinander angeordneten Materiallagen besteht, nämlich einer ersten Materiallage 21 und einer zweiten Materiallage 23. Die erste Materiallage 21 stellt eine Strukturschicht dar, welche die Form der Verpackungsschale 4 vorgibt und für die erforderliche Steifigkeit sorgt. Die erste Materiallage 21 kann beispielsweise als Kartonlage oder Papierlage ausgebildet sein. Die zweite Materiallage 23 ist auf der dem Produkt zugewandten Seite über der ersten Materiallage 21 angeordnet. Die zweite Materiallage 23 kann als Folienlage ausgebildet sein, um eine Sauerstoffbarriere zwischen dem Produkt und der Umgebung herzustellen. Die Siegelung zwischen der Deckelfolie 7 und der Verpackungsschale 4 erfolgt in der gezeigten Ausführungsform entlang der Siegelnaht 19 zwischen der Deckelfolie 7 und der zweiten Materiallage 23 der Verpackungsschale 4.

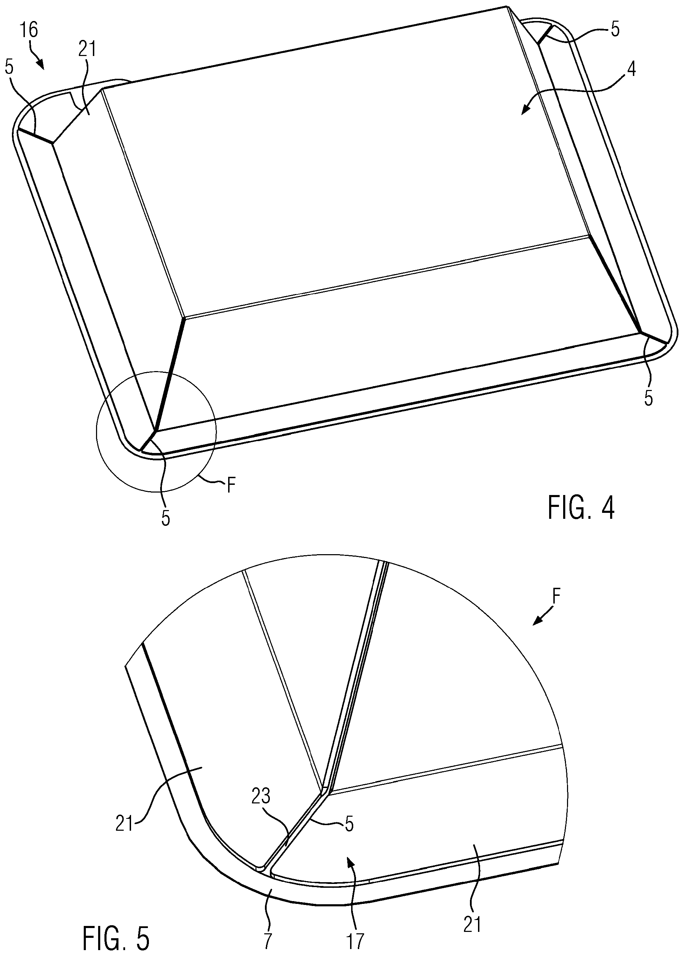

Figur 4 zeigt die Verpackung 16 in einer Perspektivansicht von unten. In Figur 4 ist ersichtlich, dass die erste Materiallage 21 der Verpackungsschale 4 nicht durchgängig ausgebildet ist. Im Bereich der Ecken der Verpackungsschale 4 weist die erste Materiallage 21 Schlitze 5 auf. Die Schlitze 5 sind vorgesehen, um das Falten der ersten Materiallage 21 zu der Verpackungsschale 4 zu erleichtern. Die Schlitze 5 erstrecken sich auch über den Flansch 17 hinweg. Insbesondere erstrecken sich die Schlitze 5 im Wesentlichen radial nach außen über den Flansch 17 hinweg.

Figur 5 zeigt eine Detailansicht des Bereichs F aus Figur 4. In Figur 5 ist ersichtlich, dass sich die zweite Materiallage 23 auch über die Schlitze 5 hinweg erstreckt. Hierdurch wird sichergestellt, dass die Verpackungsschale 4 auch im Bereich der Schlitze 5 dicht ist. Insbesondere ist die zweite Materiallage 23 über den Flansch 17 hinweg durchgängig ausgebildet.

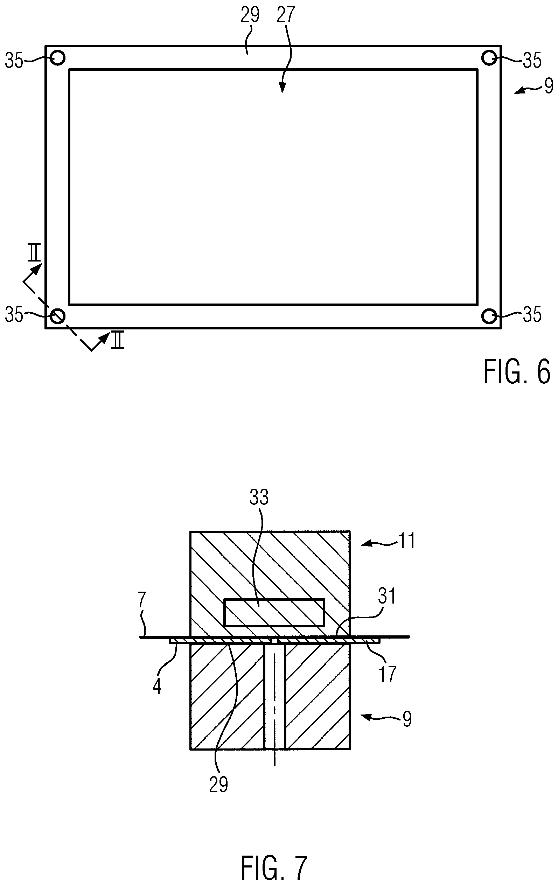

Figur 6 zeigt eine schematische Draufsicht auf das Unterwerkzeug 9 der Siegelstation 5. Das Unterwerkzeug 9 bildet eine Schalenaufnahme zur Aufnahme der Verpackungsschale 4. Der Körper der Verpackungsschale 4 kann in einem Aufnahmeraum 27 des Unterwerkzeugs 9 aufgenommen sein, während der Flansch 17 der Verpackungsschale 4 auf einer unteren Siegelfläche 29 des Unterwerkzeugs 9 aufliegt. Die untere Siegelfläche 29 bildet eine Auflage für den Flansch 17 der Verpackungsschale 4.

Figur 7 ist eine Schnittdarstellung bezüglich der Schnittlinie II-II aus Figur 6 während des Siegelprozesses, wobei in Figur 7 auch die Verpackungsschale 4, die Deckelfolie 7 und das Oberwerkzeug 11 dargestellt sind, welche in Figur 6 der Übersichtlichkeit halber weggelassen sind. Das Oberwerkzeug 11 umfasst eine nach unten gerichtete obere Siegelfläche 31. Die untere Siegelfläche 29 und die obere Siegelfläche 31 liegen sich gegenüber. Die untere Siegelfläche 29 und die obere Siegelfläche 31 können jeweils als horizontale, ebene Flächen ausgebildet sein. Während des Siegelvorgangs werden die Verpackungsschale 4 und die Deckelfolie 7 zwischen der unteren Siegelfläche 29 und der oberen Siegelfläche 31 zusammengepresst und somit verbunden. Vorzugsweise erfolgt dies unter Wärmeeinwirkung, um den Vorgang zu erleichtern. Zum Beispiel kann das Unterwerkzeug 9 und/oder das Oberwerkzeug 11 mittels einer integrierten Heizeinrichtung 33 beheizt werden.

In den Bereichen des Flansches 17, in denen die Verpackungsschale 4 sowohl durch die erste Materiallage 21 als auch durch die darüber angeordnete zweite Materiallage 23 gebildet ist, also überall außer im Bereich der Schlitze 5, liegt beim Siegeln ein direkter Kontakt zwischen der unteren Siegelfläche 29 und dem Flansch 17 und ein direkter Kontakt zwischen der oberen Siegelfläche 31 und der Deckelfolie 7 vor. Beim Aneinanderpressen der Verpackungsschale 4 und der Deckelfolie 7 wirkt in diesen Bereichen die untere Siegelfläche 29 als Gegendruckelement für die obere Siegelfläche 31 und wirkt die obere Siegelfläche 31 als Gegendruckelement für die untere Siegelfläche 29. Im Bereich der Schlitze 5 ist dies aufgrund der reduzierten Dicke der Verpackungsschale 4 (wegen des lokalen Fehlens der ersten Materiallage 21) nicht der Fall. Im Bereich der Schlitze 5 liegt die Verpackungsschale 4 nicht an der unteren Siegelfläche 29 an. Die untere Siegelfläche 29 kann beim Siegeln im Bereich der Schlitze 5 somit nicht wirksam als Gegendruckelement fungieren. Ohne weitere Maßnahmen hätte dies eine Schwachstelle der Siegelnaht 19 mit einer geringeren Verbindungsstärke im Bereich der Schlitze 5 zur Folge. Im Bereich der Schlitze 5 könnten Undichtigkeiten der Verbindung zwischen der Verpackungsschale 4 und der Deckelfolie 7 auftreten.

Um dieser Problematik zu begegnen, sind in der unteren Siegelfläche 29 im Bereich der Ecken, an den Stellen, an denen die Schlitze 5 der Verpackungsschale 4 während des Siegelvorgangs liegen, Druckgasöffnungen 35 vorgesehen. Die Druckgasöffnungen 35 sind mit einer in Figur 1 schematisch dargestellten Druckgasquelle 37 verbunden und dazu konfiguriert, von der Druckgasquelle 37 bereitgestelltes Druckgas entweichen zu lassen. Die Siegelstation 5 umfasst zudem ein in Figur 1 schematisch dargestelltes Ventil 39, welches dazu konfiguriert ist, einen Fluss des Druckgases von der Druckgasquelle 37 zu den Druckgasöffnungen 35 wahlweise zu verhindern oder freizugeben. Während des Siegelvorgangs wird das Ventil 39 betätigt, um Druckgas durch die Druckgasöffnungen 35 entweichen zu lassen und im Bereich der Schlitze 5 lokal einen Überdruck zu erzeugen. Dieser Überdruck wirkt beim Siegeln im Bereich der Schlitze 5 als Gegendruckelement mit der oberen Siegelfläche 31 zusammen und sorgt dafür, dass die Siegelnaht 19 auch im Bereich der Schlitze 5 zuverlässig mit einer ausreichenden Verbindungsstärke und Dichtigkeit hergestellt wird. Das Druckgas drückt in der dargestellten Ausführungsform die zweite Materiallage 23 im Bereich der Schlitze 5 von unten nach oben gegen die Deckelfolie 7 und sorgt im Bereich der Schlitze 5 zusammen mit der oberen Siegelfläche 31 für ein Zusammendrücken der Verpackungsschale 4 und der Deckelfolie 7.

Im Folgenden wird der Ablauf eines Siegelvorgangs in der Siegelstation 5 beschrieben. Der Siegelvorgang wird vorzugsweise mittels einer Steuereinheit 41 (siehe Figur 1) der Siegelstation 5 gesteuert werden. Die Steuereinheit 41 kann eine separate Steuereinheit der Siegelstation 5 sein oder funktionsmäßig Teil einer Gesamtsteuereinheit der Verpackungsmaschine 1 sein. Es ist denkbar, aber nicht erforderlich, dass die Steuereinheit 41 funktional oder physisch von einer Gesamtsteuereinheit der Verpackungsmaschine 1 getrennt ist.

Zu Beginn des Siegelvorgangs wird die Antriebseinrichtung 13 von der Steuereinheit 41 angesteuert, um das Unterwerkzeug 9 und das Oberwerkzeug 11 in die geschlossene Stellung zu verfahren und aneinanderzupressen. Hierbei werden die Verpackungsschale 4 und die Deckelfolie 7 entlang des Verlaufs der zu erstellenden Siegelnaht 19 zwischen der unteren Siegelfläche 29 und der oberen Siegelfläche 31 aneinandergepresst. Dies erfolgt unter Wärmeeinwirkung. Nachdem die Verpackungsschale 4 und die Deckelfolie 7 auf diese Art und Weise über einen ersten Zeitraum hinweg zusammengepresst wurden, steuert die Steuereinheit 41 das Ventil 39 zum Freigeben des Flusses des Druckgases zu den Druckgasöffnungen 35 an. Im Bereich der Schlitze 5 wird, wie beschrieben, ein lokaler Überdruck aufgebaut, um in diesen Bereichen die zweite Materiallage 23 der Verpackungsschale 4 von unten gegen die Deckelfolie 7 zu drücken. Der lokale Überdruck wird über einen zweiten Zeitraum hinweg aufrechterhalten. Nach Ablauf des zweiten Zeitraums steuert die Steuereinheit 41 das Ventil 39 an, um den Fluss des Druckgases zu den Druckgasöffnungen 35 wieder zu unterbinden. Nach dem Unterbinden des Flusses des Druckgases zu den Druckgasöffnungen 35 steuert die Steuereinheit 41 die Antriebseinrichtung 13 an, um die Siegelstation 5 wieder zu öffnen.

Vorzugsweise wird das Druckgas vor Erreichen der Druckgasöffnungen 35 mittels einer Druckgas-Heizeinrichtung 43 beheizt, um eine Abkühlung des Siegelbereichs durch das Druckgas zu vermeiden. In der dargestellten Ausführungsform ist die Druckgas-Heizeinrichtung 43 an der Druckgasquelle 37 vorgesehen.

In der dargestellten Ausführungsform wird durch das lokale Zuführen des Druckgases eine aufgrund einer lokalen Aussparung der ersten Materiallage 21 lokal verminderte Dicke der Verpackungsschale 4 ausgeglichen. Die Erfindung könnte aber auch zum Ausgleich anderer lokaler Irregularitäten im Aufbau der Verpackungsschale 4 im Bereich der Siegelnaht 19 angewandt werden. Zum Beispiel könnte anstatt einer Aussparung in einer unteren Materiallage 21 der Verpackungsschale 4 eine Aussparung in einer oberen Materiallage 23 der Verpackungsschale 4 ausgeglichen werden. Es wäre zum Beispiel auch denkbar, durch das lokale Vorsehen der Druckgas während des Siegelns Irregularitäten auszugleichen, welche durch lokale Materialunterschiede (mit oder ohne Dickenunterschiede) der Verpackungsschale 4 im Bereich der Siegelnaht 19 gegeben sind. Beispielsweise könnte eine lokal erhöhte Kompressibilität der Verpackungsschale 4 im Bereich der Siegelnaht 19 ausgeglichen werden.

In der gezeigten Ausführungsform sind die Druckgasöffnungen 35 in der unteren Siegelfläche 29 vorgesehen. Der durch die Druckgaszufuhr erzeugte lokale Überdruck kann in diesem Fall beim Siegeln als Gegendruckelement mit der oberen Siegelfläche 31 zusammenwirken. Je nach Anwendung wäre es alternativ oder zusätzlich auch denkbar, entsprechende Druckgasöffnungen 35 in der oberen Siegelfläche 31 vorzusehen. Durch Zufuhr von Druckgas durch diese Druckgasöffnungen 35 könnte lokal ein Überdruck erzeugt werden, welcher beim Siegeln als Gegendruckelement mit der unteren Siegelfläche 29 zusammenwirken könnte.

## Patentansprüche

1. Verfahren zum Verschließen einer Verpackungsschale (4), umfassend:
Anordnen einer mit einem zu verpackenden Produkt befüllten Verpackungsschale (4) zwischen einem Unterwerkzeug (9) und einem Oberwerkzeug (11) einer Siegelstation (5);
Positionieren einer Deckelfolie (7) über der Verpackungsschale (4) zwischen dem Unterwerkzeug (9) und dem Oberwerkzeug (11) der Siegelstation (5); und
Zusammenpressen der Deckelfolie (7) und der Verpackungsschale (4) durch eine untere Siegelfläche (29) des Unterwerkzeugs (9) und eine mit der unteren Siegelfläche (29) zusammenwirkende obere Siegelfläche (31) des Oberwerkzeugs (11), wobei bei dem Zusammenpressen die Deckelfolie (7) und die Verpackungsschale (4) entlang einer Siegelnaht (19) miteinander verbunden werden,
wobei während des Zusammenpressens der Deckelfolie (7) und der Verpackungsschale (4) durch Zuführen von Druckgas aus einer Druckgasquelle (37) lokal ein Überdruck erzeugt wird, welcher als Gegendruck mit der unteren Siegelfläche (29) oder mit der oberen Siegelfläche (31) zusammenwirkt, um die Deckelfolie (7) und die Verpackungsschale (4) zusammenzupressen.

2. Verfahren nach Anspruch 1, wobei der Überdruck in einem Bereich erzeugt wird, in dem die Verpackungsschale (4) lokal eine reduzierte Dicke aufweist.

3. Verfahren nach Anspruch 1 oder 2, wobei die Verpackungsschale (4) zumindest zwei übereinander angeordnete Materiallagen (21, 23) umfasst, wobei der Überdruck in einem Bereich erzeugt wird, in dem zumindest eine Materiallage (21, 23) der Verpackungsschale (4) ausgespart ist.

4. Verfahren nach einem der vorangehenden Ansprüche, wobei der Überdruck an zumindest einer Ecke der Verpackungsschale (4) erzeugt wird.

5. Verfahren nach einem der vorangehenden Ansprüche, wobei in der unteren Siegelfläche (29) oder in der oberen Siegelfläche (31) eine Druckgasöffnung (35) vorgesehen ist und der Überdruck durch die Druckgasöffnung (35) bereitgestellt wird.

6. Verfahren nach einem der vorangehenden Ansprüche, wobei das Erzeugen des Überdrucks durch Zuführen des Druckgases erst erfolgt, nachdem die Deckelfolie (7) und die Verpackungsschale (4) zumindest für einen ersten Zeitraum durch die untere Siegelfläche (29) und die obere Siegelfläche (31) zusammengepresst wurden.

7. Verfahren nach einem der vorangehenden Ansprüche, wobei der Überdruck vor einem Beenden des Zusammenpressens der Deckelfolie (7) und der Verpackungsschale (4) durch die untere Siegelfläche (29) und die obere Siegelfläche (31) wieder abgebaut wird.

8. Verfahren nach einem der vorangehenden Ansprüche, wobei der Überdruck ein Druck von zumindest 4 bar, oder zumindest 5 bar, oder zumindest 6 bar ist.

9. Verfahren nach einem der vorangehenden Ansprüche, wobei das Druckgas vor dem Zuführen aktiv erwärmt wird.

10. Siegelstation (5), umfassend:
ein Unterwerkzeug (9) mit einer unteren Siegelfläche (29);
ein oberhalb des Unterwerkzeugs (9) angeordnetes Oberwerkzeug (11) mit einer oberen Siegelfläche (31);
eine Antriebseinrichtung (13), welche dazu konfiguriert ist, das Unterwerkzeug (9) und das Oberwerkzeug (11) aufeinander zu zubewegen, so dass eine Verpackungsschale (4) und eine Deckelfolie (7) zum Verschließen der Verpackungsschale (4) zwischen der unteren Siegelfläche (29) und der oberen Siegelfläche (31) aneinandergepresst werden; und
eine Druckgasquelle (37),
wobei in der unteren Siegelfläche (29) oder in der oberen Siegelfläche (31) eine Druckgasöffnung (35) vorgesehen ist, welche dazu konfiguriert ist, ein von der Druckgasquelle (37) bereitgestelltes Druckgas entweichen zu lassen.

11. Siegelstation nach Anspruch 10, wobei die untere Siegelfläche (29) oder die obere Siegelfläche (31) eine Vertiefung aufweist, und wobei die Druckgasöffnung (35) in der Vertiefung angeordnet ist.

12. Siegelstation nach Anspruch 10 oder 11, wobei
die Siegelstation (5) zudem ein Ventil (39) umfasst, welches dazu konfiguriert ist, einen Fluss des Druckgases von der Druckgasquelle (37) zu der Druckgasöffnung (35) wahlweise zu verhindern oder freizugeben, und
die Siegelstation (5) zudem eine Steuereinheit (41) umfasst, welche dazu konfiguriert ist, die Antriebseinrichtung (13) zum Aneinanderpressen der Verpackungsschale (4) und der Deckelfolie (7) durch die untere Siegelfläche (29) und die obere Siegelfläche (31) anzusteuern und das Ventil (39) zum Freigeben des Flusses des Druckgases zu der Druckgasöffnung (35) anzusteuern, nachdem die Deckelfolie (7) und die Verpackungsschale (4) zumindest für einen vorbestimmten ersten Zeitraum zusammengepresst wurden.

13. Siegelstation nach einem der Ansprüche 10 bis 12, wobei das untere Siegelwerkzeug (9) als Schalenaufnahme zur Aufnahme der Verpackungsschale (4) ausgebildet ist, wobei die untere Siegelfläche (29) eine Auflagefläche für einen Flansch (17) der Verpackungsschale (4) bereitstellt.

14. Verwendung von Druckgas zum Bereitstellen von Gegendruck beim Verbinden einer Verpackungsschale (4) mit einer Deckelfolie (7) entlang einer Siegelnaht (19) durch Zusammenpressen der Verpackungsschale (4) und der Deckelfolie (7) durch eine untere Siegelfläche (29) und eine obere Siegelfläche (31).

15. Verwendung nach Anspruch 14, wobei das Druckgas bezüglich einer Erstreckung der Siegelnaht (19) nur lokal zugeführt wird, um während des Verbindens eine lokale Irregularität in der Verpackungsschale (4) auszugleichen.
